# EUROPÄISCHE PATENTANMELDUNG

(11) **EP 4 465 114 A1**
(43) Veröffentlichungstag der Anmeldung: **20.11.2024**
(21) Anmeldenummer: 24175610.5
(22) Anmeldetag: 14.05.2024
(51) Int. Cl.: G02B 27/01

(54) **BILDERZEUGUNGSEINRICHTUNG MIT EINEM AN EINER SCHMALSEITE EINES ABDECKELEMENTS ANGEORDNETEN LICHTSENSOR, KOPF-OBEN-ANZEIGEVORRICHTUNG UND KRAFTFAHRZEUG**

(30) Priorität: 17.05.2023 DE 102023113064
(71) Anmelder: Valeo Schalter und Sensoren GmbH, 74321 Bietigheim-Bissingen (DE)
(72) Erfinder: Schoch, Lars, 74321 Bietigheim-Bissingen (DE)
(74) Vertreter: Ralf, Thorge

(57) **Zusammenfassung**

Die Erfindung betrifft eine Bilderzeugungseinrichtung (20) für eine Kopf-Oben-Anzeigevorrichtung eines Kraftfahrzeugs, mit einem Bildschirm (24) zum Bereitstellen eines Bilds, welches an einer lichtdurchlässigen Projektionsfläche in ein Sichtfeld eines Nutzers der Kopf-Oben-Anzeigevorrichtung reflektierbar ist. Eine Beleuchtungseinheit (36) ist zum Beaufschlagen einer Rückseite (38) des Bildschirms (24) mit Licht vorgesehen und wenigstens ein Lichtsensor (44) zum Erfassen von Sonnenlicht, mit welchem der Bildschirm (24) beaufschlagbar ist. Der wenigstens eine Lichtsensor (44) ist an einer Schmalseite (46) eines lichtdurchlässigen Abdeckelements (48) der Bilderzeugungseinrichtung (20) angeordnet. Zumindest ein Teil des zu erfassenden Sonnenlichts ist über die Schmalseite (46) des Abdeckelements (48) in den wenigstens einen Lichtsensor (44) einbringbar. Des Weiteren betrifft die Erfindung eine Kopf-Oben-Anzeigevorrichtung mit einer solchen Bilderzeugungseinrichtung (20) und ein Kraftfahrzeug mit der Kopf-Oben-Anzeigevorrichtung.

## Beschreibung

Die Erfindung betrifft eine Bilderzeugungseinrichtung für eine Kopf-Oben-Anzeigevorrichtung eines Kraftfahrzeugs, mit einem Bildschirm zum Bereitstellen eines Bilds. Das Bild ist an einer lichtdurchlässigen Projektionsfläche in ein Sichtfeld eines Nutzers der Kopf-Oben-Anzeigevorrichtung reflektierbar. Eine Beleuchtungseinheit der Bilderzeugungseinrichtung ist zum Beaufschlagen einer Rückseite des Bildschirms mit Licht ausgebildet. Wenigstens ein Lichtsensor der Bilderzeugungseinrichtung ist zum Erfassen von Sonnenlicht ausgebildet, mit welchem der Bildschirm beaufschlagbar ist. Des Weiteren betrifft die Erfindung eine Kopf-Oben-Anzeigevorrichtung mit einer solchen Bilderzeugungseinrichtung und ein Kraftfahrzeug mit der Kopf-Oben-Anzeigevorrichtung.

In Kraftfahrzeugen kann eine Kopf-Oben-Anzeigevorrichtung, welche auch als Head-Up-Display bezeichnet wird, verwendet werden, um das mittels der Bilderzeugungseinrichtung bereitstellbare Bild in das Sichtfeld eines Fahrers zu projizieren, während der Fahrer durch eine Frontscheibe oder Windschutzscheibe des Kraftfahrzeugs in die Umgebung blickt. Naturgemäß kann es bei der Nutzung der Kopf-Oben-Anzeigevorrichtung beziehungsweise des Head-Up-Displays dazu kommen, dass aus der Umgebung des Kraftfahrzeugs stammendes Sonnenlicht durch die Frontscheibe oder Windschutzscheibe hindurch hin zu der Bilderzeugungseinrichtung der Kopf-Oben-Anzeigevorrichtung gelangt. Dies kann zu einer unerwünscht starken, insbesondere lokalen, Erwärmung des Bildschirms der Kopf-Oben-Anzeigevorrichtung führen.

Zudem wird im Betrieb der Bilderzeugungseinrichtung der Bildschirm von der Rückseite her mittels der Beleuchtungseinheit mit Licht beaufschlagt, wobei ein Großteil des von der Beleuchtungseinheit bereitgestellten Lichts von dem Bildschirm absorbiert wird. Lediglich ein kleiner Teil des von der als Hintergrundbeleuchtung ausgebildeten Beleuchtungseinheit bereitgestellten Lichts gelangt durch den Bildschirm hindurch, um das für den Nutzer sichtbare Bild mit einer bestimmten Helligkeit auszugeben. Die Absorption von Licht der Beleuchtungseinheit im Bereich des Bildschirms kann zusätzlich zu dem Sonnenlicht zu der Erwärmung des Bildschirms beitragen. Bei einem zu starken Hitzeeintrag in den Bildschirm kann es zu einer (in der Regel reversiblen beziehungsweise vorübergehenden) Funktionsbeeinträchtigung des Bildschirms im Hinblick auf seine Fähigkeit kommen, das Bild bereitzustellen. Damit ist die Nutzbarkeit der Bilderzeugungseinrichtung eingeschränkt, was ungünstig beziehungsweise nicht wünschenswert ist.

Es ist daher vorteilhaft, wenn rechtzeitig festgestellt werden kann, ob die Bilderzeugungseinrichtung mit Sonnenlicht beaufschlagt wird, welches zusätzlich zu dem im Betrieb der Bilderzeugungseinrichtung von der Beleuchtungseinheit abgegebenen Licht zu einem Erwärmen des Bildschirms führen kann. Zum Zweck des Erfassens des auf den Bildschirm auftreffenden Sonnenlichts kann der eingangs erwähnte Lichtsensor vorgesehen sein.

Die US 2019/0346674 A1 beschreibt ein Head-Up-Display, bei welchem an einer Frontseite eines Bildschirms ein reflektierendes optisches Element angeordnet ist. Auf das reflektierende optische Element auftreffendes, externes Sonnenlicht wird hin zu einem optischen Sensor reflektiert, welcher innerhalb eines Gehäuses des Head-Up-Displays angeordnet ist.

Als nachteilig ist hierbei der Umstand anzusehen, dass eine derartige, von dem reflektierenden optischen Element beabstandete Anbringung des optischen Sensors innerhalb des Gehäuses des Head-Up-Displays mit einem hohen Bauraumbedarf einhergeht. Zudem ist die Lichtführung des Sonnenlichts hin zu dem optischen Sensor geeignet auszulegen, was weitere Schwierigkeiten in der Ausgestaltung des Head-Up-Displays mit sich bringt. Darüber hinaus muss das von dem Bildschirm bereitgestellte Bild zunächst durch das reflektierende optische Element hindurchtreten, damit das Bild anschließend in das Sichtfeld eines Nutzers des Head-Up-Displays projiziert werden kann. Auch dies ist ungünstig.

Aufgabe der vorliegenden Erfindung ist es, eine besonders einfach und kompakt aufgebaute Bilderzeugungseinrichtung der eingangs genannten Art zu schaffen, und eine Kopf-Oben-Anzeigevorrichtung mit einer solchen Bilderzeugungseinrichtung sowie ein Kraftfahrzeug mit der Kopf-Oben-Anzeigevorrichtung anzugeben.

Diese Aufgabe wird durch eine Bilderzeugungseinrichtung mit den Merkmalen des Patentanspruchs 1, eine Kopf-Oben-Anzeigevorrichtung mit den Merkmalen des Patentanspruchs 12 und ein Kraftfahrzeug mit den Merkmalen des Patentanspruchs 13 gelöst. Vorteilhafte Ausgestaltungen mit zweckmäßigen Weiterbildungen der Erfindung sind in den abhängigen Patentansprüchen und in der nachfolgenden Beschreibung angegeben.

Die erfindungsgemäße Bilderzeugungseinrichtung für eine Kopf-Oben-Anzeigevorrichtung eines Kraftfahrzeugs umfasst einen Bildschirm zum Bereitstellen eines Bilds, welches an einer lichtdurchlässigen Projektionsfläche in ein Sichtfeld eines Nutzers der Kopf-Oben-Anzeigevorrichtung reflektierbar ist. Eine Beleuchtungseinheit der Bilderzeugungseinrichtung ist zum Beaufschlagen einer Rückseite des Bildschirms mit Licht vorgesehen. Wenigstens ein Lichtsensor der Bilderzeugungseinrichtung ist zum Erfassen von Sonnenlicht ausgebildet, mit welchem der Bildschirm beaufschlagbar ist. Der wenigstens eine Lichtsensor ist hierbei an einer Schmalseite eines lichtdurchlässigen Abdeckelements der Bilderzeugungseinrichtung angeordnet, wobei zumindest ein Teil des zu erfassenden Sonnenlichts über die Schmalseite des Abdeckelements in den wenigstens einen Lichtsensor einbringbar ist.

Der Lichtsensor ist somit in vorteilhafter Weise nicht direkt im Weg des Sonnenlichts angeordnet, welches gegebenenfalls hin zu dem Bildschirm gelangen kann. Dadurch behindert der Lichtsensor auch nicht das Weitergeben des von dem Bildschirm ausgegebenen Bilds hin zu der lichtdurchlässigen Projektionsfläche, wenn die Bilderzeugungseinrichtung in der Kopf-Oben-Anzeigevorrichtung zum Einsatz kommt. Vielmehr wird der Lichtsensor indirekt mit zumindest einem Teil des Sonnenlichts beaufschlagt, welches durch das Abdeckelement hindurch hin zu wenigstens einer Komponente des Bildschirms gelangen kann. Dennoch lässt sich mittels des an der Schmalseite des lichtdurchlässigen Abdeckelements angeordneten wenigstens einen Lichtsensors ein etwaiger Einfall von Sonnenlicht auf den Bildschirm sehr einfach und zuverlässig erfassen.

Des Weiteren ist die Bilderzeugungseinrichtung mit dem an der Schmalseite des lichtdurchlässigen Abdeckelements angeordneten, insbesondere an der Schmalseite angebrachten, wenigstens einen Lichtsensor besonders einfach und kompakt aufgebaut. Denn das Sonnenlicht braucht nicht mittels einer Reflexionseinrichtung hin zu dem wenigstens einen Lichtsensor reflektiert zu werden. Vielmehr gelangt zumindest der Teil des zu erfassenden Sonnenlichts innerhalb des nach Art eines Lichtleiters wirkenden Abdeckelements hin zu der Schmalseite des Abdeckelements und von dort hin zu dem wenigstens einen Lichtsensor. Durch die Anordnung, insbesondere Anbringung, des wenigstens einen Lichtsensors an der Schmalseite des lichtdurchlässigen Abdeckelements ist daher eine sehr kompakte Bauform der den Lichtsensor aufweisenden Bilderzeugungseinrichtung geschaffen.

Des Weiteren ist das Vorsehen des lichtdurchlässigen Abdeckelements nicht nur dahingehend vorteilhaft, dass ein Teil des gegebenenfalls auf das Abdeckelement auftreffenden Sonnenlichts hin zu der Schmalseite und weiter über die Schmalseite hin zu dem Lichtsensor ableitet wird. Vielmehr sorgt das lichtdurchlässige Abdeckelement in vorteilhafter Weise für eine verbesserte Verteilung von Wärme in der Fläche des Abdeckelements. Der Wärmeeintrag in das Abdeckelement ist hierbei durch das Beaufschlagen der Bilderzeugungseinrichtung mit dem Sonnenlicht bedingt. Auch diese Wirkung des Abdeckelements ist vorteilhaft, um insbesondere für Wärme empfindliche Komponenten des Bildschirms vor einer zu starken Erwärmung beziehungsweise vor einer unerwünschten Überhitzung zu schützen. Zudem sorgt das Abdeckelement für einen mechanischen Schutz von empfindlichen Komponenten des Bildschirms.

Aufgrund der Lichtdurchlässigkeit des Abdeckelements kann dennoch das von der Beleuchtungseinheit bereitgestellte Licht, mit welchem im Betrieb der Bilderzeugungseinrichtung die Rückseite des Bildschirms beaufschlagt wird und welches nicht von dem Bildschirm absorbiert wird, sehr einfach und ungehindert weiter zu einer Optikeinrichtung der Kopf-Oben-Anzeigevorrichtung zu gelangen. Die Optikeinrichtung kann wiederum dafür sorgen, in dem Sichtfeld des Nutzers der Kopf-Oben-Anzeigevorrichtung das von dem Bildschirm bereitgestellte Bild darzustellen.

Des Weiteren ist aufgrund der Anordnung, insbesondere Anbringung, des wenigstens einen Lichtsensors an der Schmalseite des lichtdurchlässigen Abdeckelements der wenigstens eine Lichtsensor in vorteilhafter Weise sehr nahe an wärmeempfindlichen Komponenten des Bildschirms angeordnet.

Der Bildschirm oder das Display der Bilderzeugungseinrichtung kann insbesondere als Flüssigkristallanzeige ausgebildet sein. Bei Ausbildung des Bildschirms als Flüssigkristallanzeige sind insbesondere die Flüssigkristalle vor einer unerwünscht starken Erwärmung zu schützen, um die Funktionstüchtigkeit der Flüssigkristallanzeige im Hinblick auf das Bereitstellen des Bilds nicht zu beeinträchtigen. Daher ist es von Vorteil, wenn über den an der Schmalseite des lichtdurchlässigen Abdeckelements angeordneten wenigstens einen Lichtsensor sehr rasch und zuverlässig festgestellt werden kann, ob im Betrieb der Bilderzeugungseinrichtung zusätzlich zu dem von der Beleuchtungseinheit abgegebenen Licht gegebenenfalls Sonnenlicht hin zu den für Wärme empfindlichen Komponenten des Bildschirms gelangt, insbesondere hin zu Flüssigkristallen des Bildschirms.

In vorteilhafter Weise ist das Erfassen des Sonnenlichts mittels des wenigstens einen Lichtsensors sehr viel rascher im Hinblick auf ein Detektieren einer möglichen Beeinträchtigung des Bildschirms durch Wärme, als dies bei einer Verwendung eines Temperatursensors der Fall wäre. Denn mittels eines Temperatursensors kann möglicherweise erst dann auf eine unerwünscht starke Erwärmung im Bereich des Bildschirms geschlossen werden, wenn diese Erwärmung bereits eingetreten ist. Demgegenüber ermöglicht es der wenigstens eine Lichtsensor, eine Beaufschlagung des Bildschirms mit Sonnenlicht bereits zu erfassen, bevor eine unerwünscht starke Erwärmung von für Wärme empfindlichen Komponenten des Bildschirms mit Sonnenlicht eingetreten ist. Dies ist vorteilhaft.

Indem das lichtdurchlässige Abdeckelement selber als Lichtleiter genutzt wird, um auf das Abdeckelement auftreffendes Sonnenlicht hin zu der Schmalseite des Abdeckelements zu transportieren, ergeben sich für die Anbringung des Lichtsensors an der Schmalseite des Abdeckelements zudem sehr vielfältige Möglichkeiten. Dies ist im Hinblick auf den einfachen und kompakten Aufbau der Bilderzeugungseinrichtung und insbesondere die Unterbringung des wenigstens einen Lichtsensors in der Bilderzeugungseinrichtung vorteilhaft.

Insbesondere kann aufgrund einer internen Totalreflexion, also einer innerhalb des lichtdurchlässigen Abdeckelements auftretenden Totalreflexion, das Beaufschlagen des Lichtsensors zumindest mit dem Teil des zu erfassenden Sonnenlichts über die Schmalseite des Abdeckelements erreicht werden. Insbesondere wenn die Bilderzeugungseinrichtung ohnehin das lichtdurchlässige Abdeckelement aufweist, lässt sich das Abdeckelement multifunktional, nämlich unter anderem als der Lichtleiter nutzen. Dies ist vorteilhaft.

Vorzugsweise ist das Abdeckelement als Lichtleiter für in dem Sonnenlicht enthaltenes Infrarotlicht ausgebildet. Hierbei ist in das Abdeckelement eingekoppeltes Infrarotlicht innerhalb des Abdeckelements hin zu der Schmalseite transportierbar, und der wenigstens eine Lichtsensor ist zum Erfassen von Infrarotlicht ausgebildet. Auf diese Weise kann dem Umstand Rechnung getragen werden, dass das von Lichtquellen der Beleuchtungseinheit im Betrieb der Bilderzeugungseinrichtung abgegebene Licht vorzugsweise kein Infrarotlicht beziehungsweise allenfalls einen vernachlässigbaren Anteil an Infrarotlicht enthält. Daher kann aus den von dem wenigstens einen Lichtsensor abgegebenen Signalen sehr zuverlässig darauf geschlossen werden, dass Sonnenlicht mit in dem Sonnenlicht enthaltenem Infrarotlicht das Abdeckelement erreicht hat. Folglich können rechtzeitig Maßnahmen ergriffen werden, um ein durch das Sonnenlicht im Zusammenwirken mit dem Licht der Beleuchtungseinheit bedingtes, unerwünscht starkes Aufheizen von für Wärme empfindlichen Komponenten des Bildschirms zu vermeiden.

Der wenigstens eine Lichtsensor kann beispielsweise als Photodiode und/oder als Fototransistor und/oder als Fotowiderstand und/oder als Photozelle ausgebildet sein. Mittels derartiger Lichtsensoren lässt sich sehr zuverlässig Sonnenlicht erfassen, mit welchem der Bildschirm der Bilderzeugungseinrichtung im Betrieb der Bilderzeugungseinrichtung beaufschlagt werden kann.

Das Abdeckelement kann als frontseitige Scheibe des Bildschirms ausgebildet sein, wobei die frontseitige Scheibe der Rückseite des Bildschirms gegenüberliegt. Dementsprechend kann der Lichtsensor in den Bildschirm integriert sein, indem der Lichtsensor an der Schmalseite der frontseitigen Scheibe des Bildschirms angeordnet ist. Dies ist im Hinblick auf den kompakten Aufbau der Bilderzeugungseinrichtung vorteilhaft.

Zusätzlich oder alternativ kann das Abdeckelement als von dem Bildschirm separate Schutzscheibe ausgebildet sein. Hierbei ist die Schutzscheibe an einer der Rückseite des Bildschirms gegenüberliegenden Seite des Bildschirms angeordnet. Bei Anordnung des wenigstens einen Lichtsensors an der Schmalseite der Schutzscheibe lässt sich insbesondere ein Nachrüsten der Bilderzeugungseinrichtung mit dem wenigstens einen Bildsensor besonders einfach realisieren. Denn es brauchen dann an dem Bildschirm keine Veränderungen vorgenommen zu werden. Vielmehr ist lediglich an einer der Rückseite des Bildschirms gegenüberliegenden Frontseite des Bildschirms die Schutzscheibe anzuordnen, an deren Schmalseite der wenigstens eine Lichtsensor angeordnet ist beziehungsweise angeordnet werden kann.

Das Anordnen der von dem Bildschirm separaten Schutzscheibe an der Frontseite des Bildschirms ist außerdem dahingehend vorteilhaft, dass durch die Schutzscheibe ein mechanischer Schutz für den Bildschirm bereitgestellt ist. Zudem kann durch die Schutzscheibe in vorteilhafter Weise eine gute Verteilung von Wärme erreicht werden, welche mit einem Beaufschlagen der Schutzscheibe mit Sonnenlicht einhergeht. So kann besonders weitgehend vermieden werden, dass es bei einer Beaufschlagung des Bildschirms mit dem Sonnenlicht zu einer insbesondere punktuell unerwünscht hohen Wärmebelastung des Bildschirms kommt. Dies ist vorteilhaft, um eine Funktionsbeeinträchtigung von Komponenten des Bildschirms aufgrund von Wärme zu verhindern.

Das Abdeckelement kann aus einem Glas gebildet sein. Durch das Glas lässt sich sehr einfach die Lichtleiterfunktion des Abdeckelements bereitstellen, an dessen Schmalseite zumindest der Teil des zu erfassenden Sonnenlichts in den wenigstens einen Lichtsensor einbringbar ist. Zusätzlich oder alternativ kann das Abdeckelement aus einem Kunststoff gebildet sein. Auch bei Verwendung eines Kunststoffs lässt sich das Abdeckelement sehr einfach und zielführend als Lichtleiter nutzen, um zumindest den Teil des zu erfassenden Sonnenlichts über die Schmalseite des Abdeckelements in den wenigstens einen Lichtsensor einzubringen. Zudem lässt sich bei der Ausbildung des Abdeckelements aus Kunststoff besonders einfach eine gegebenenfalls gewünschte, komplexe Formgebung des Abdeckelements realisieren.

Insbesondere durch ein Einbringen von Additiven in einen Grundkörper des Abdeckelements lässt sich sicherstellen, dass besonders viel zu erfassendes Sonnenlicht beziehungsweise ein besonders großer Anteil des mittels des wenigstens einen Lichtsensors erfassbaren Spektrums des Sonnenlichts hin zu dem Lichtsensor gelangt. Dies gilt insbesondere, wenn die Additive nach Art von Streuelementen ausgebildet sind, mittels welchen sich eine Weiterleitung von Licht, insbesondere von Infrarotlicht, hin zu der Schmalseite des Abdeckelements erreichen lässt.

Als weiter vorteilhaft hat es sich gezeigt, wenn das Abdeckelement an der Schmalseite aufgeraut ist beziehungsweise eine größere Rauheit aufweist als an Seiten, welche an die Schmalseite angrenzen. Denn durch ein solches Aufrauen der Schmalseite lässt sich ein besonders guter Lichtaustritt hin zu dem an der Schmalseite angeordneten wenigstens einen Lichtsensor erreichen.

Das Abdeckelement kann einen ersten Abschnitt umfassen, welcher an einer der Rückseite des Bildschirms gegenüberliegenden Seite des Bildschirms angeordnet ist. Hierbei erstreckt sich ein zweiter Abschnitt des Abdeckelements von der Seite des Bildschirms, welche der Rückseite gegenüberliegt, hin zu einer Leiterplatte der Beleuchtungseinheit. Der zweite Abschnitt des Abdeckelements weist hierbei die Schmalseite auf, und der Lichtsensor ist mit der Leiterplatte verbunden.

Durch das Anbringen des Lichtsensors an der Leiterplatte der Beleuchtungseinheit lässt sich insbesondere eine Verdrahtung des Lichtsensors besonders einfach und aufwandsarm realisieren. Denn an der Leiterplatte können sehr einfach und aufwandsarm Anschlüsse bereitgestellt werden, um von dem wenigstens einen Lichtsensor gelieferte Signale zu erfassen und auszuwerten.

Des Weiteren kann man sich durch das Verbinden des Lichtsensors mit der Leiterplatte den Umstand zunutze machen, dass die Beleuchtungseinheit ohnehin in vorteilhafter Weise eine Leiterplatte aufweist, an welcher sich weitere im Betrieb der Beleuchtungseinheit nutzbare Komponenten anordnen lassen.

Vorzugsweise ist an der den Lichtsensor kontaktierenden Leiterplatte eine Mehrzahl von Lichtquellen der Beleuchtungseinheit angeordnet, wobei die Lichtquellen zum Beaufschlagen der Rückseite des Bildschirms mit dem Licht ausgebildet sind. Dementsprechend kann die ohnehin zum Anordnen der Lichtquellen vorgesehene Leiterplatte in vorteilhafter Weise genutzt werden, um den wenigstens einen Lichtsensor mit der Leiterplatte zu verbinden. Dies ist vorteilhaft. Die Lichtquellen der Beleuchtungseinheit können insbesondere als Leuchtdioden ausgebildet sein.

Vorzugsweise weist ein Eckbereich des Abdeckelements, in welchem der erste Abschnitt in den zweiten Abschnitt übergeht, eine Außenseite auf, welche bezogen auf die Abschnitte geneigt ausgerichtet ist. Hierbei ist die Außenseite zum Reflektieren von zumindest einem Teil des zu erfassenden und in das Abdeckelement eingekoppelten Sonnenlichts hin zu der Schmalseite ausgebildet. Durch das Vorsehen der geneigten beziehungsweise abgeschrägt ausgebildeten Außenseite in dem Eckbereich des Abdeckelements lässt sich sehr einfach das Transportieren des in den ersten Abschnitt des Abdeckelements eingekoppelten Sonnenlichts hin zu der Schmalseite erreichen, welche nach Art einer Stirnseite des zweiten Abschnitts des Abdeckelements ausgebildet ist.

Vorzugsweise sind der erste Abschnitt und der zweite Abschnitt des Abdeckelements einstückig miteinander ausgebildet. So lassen sich die Abschnitte besonders aufwandsarm und kostengünstig bereitstellen. Dies gilt insbesondere, wenn das die beiden Abschnitte aufweisende Abdeckelement aus einem Kunststoff gebildet ist. Des Weiteren ist so eine sehr ungehinderte Weiterleitung von Licht innerhalb des Abdeckelements hin zu der Schmalseite erreichbar, an welcher der wenigstens eine Lichtsensor angeordnet ist.

Vorzugsweise weist die Bilderzeugungseinrichtung eine Mehrzahl von Lichtsensoren auf, welche an voneinander verschiedenen Schmalseiten des Abdeckelements angeordnet sind. Auf diese Weise kann besonders genau erfasst werden, ob im Betrieb der Bilderzeugungseinrichtung bestimmte Bereiche des Bildschirms einer verstärkten Beaufschlagung mit Sonnenlicht ausgesetzt sind. Dies ist insbesondere vorteilhaft, um in diesen Bereichen gezielt Gegenmaßnahmen zu ergreifen, welche geeignet sind, einer unerwünscht starken Erwärmung dieser Bereiche entgegenzuwirken.

Als derartige Maßnahmen kommen insbesondere ein Verringern einer Lichtabgabe von Lichtquellen der Beleuchtungseinheit oder gar ein Ausschalten der Lichtquellen in Betracht. Wenn wenigstens ein Bereich des Bildschirms identifiziert wird, welcher einer besonders intensiven Beaufschlagung mit Sonnenlicht ausgesetzt ist, so kann insbesondere in einem solchen Bereich das Verringern der Lichtabgabe der wenigstens einen Lichtquelle oder gar das Abschalten der wenigstens einen Lichtquelle vorgenommen werden, um wärmeempfindliche Komponenten des Bildschirms vor einer unerwünscht starken Erwärmung zu schützen.

Vorzugsweise umfasst die Bilderzeugungseinrichtung eine Auswerteeinrichtung, welche zum Auswerten von Signalen des wenigstens einen Lichtsensors ausgebildet ist. Hierbei ist die Auswerteeinrichtung dazu ausgebildet, eine Lichtabgabe wenigstens einer Lichtquelle der Beleuchtungseinheit im Betrieb der Bilderzeugungseinrichtung zumindest zu verringern. Dem liegt die Erkenntnis zugrunde, dass insbesondere ein geringfügiges Verringern der Lichtabgabe der wenigstens einen Lichtquelle für den Nutzer der Kopf-Oben-Anzeigevorrichtung im Hinblick auf die Erkennbarkeit des Bilds nicht oder allenfalls kaum bemerkbar ist. Dennoch kann durch das Verringern der Lichtabgabe der wenigstens einen Lichtquelle der Beleuchtungseinheit einer unerwünscht starken Erwärmung des Bildschirms entgegengewirkt werden. Dies gilt im besonderen Maße, wenn die Lichtquelle ausgeschaltet und somit die Lichtabgabe der Lichtquelle auf null verringert wird.

Insbesondere wenn die Bilderzeugungseinrichtung eine Mehrzahl von Lichtsensoren aufweist, kann mittels der Auswerteeinrichtung ein lokales Dimmen beziehungsweise ein lokales Verringern der Lichtabgabe von Lichtquellen der Beleuchtungseinheit bewirkt werden. Beispielsweise kann die Lichtabgabe derjenigen Lichtquellen verringert werden, welche im Betrieb der Bilderzeugungseinrichtung zum Hinterleuchten eines verstärkt mit Sonnenlicht beaufschlagten Bereichs des Bildschirms von der Rückseite her genutzt werden. Ein solches lokales Dimmen der durch die Beleuchtungseinheit bereitgestellten Hintergrundbeleuchtung des Bildschirms lässt sich besonders aufwandsarm und für den Nutzer der Kopf-Oben-Anzeigevorrichtung zumindest weitgehend unbemerkbar realisieren.

Die erfindungsgemäße Kopf-Oben-Anzeigevorrichtung für ein Kraftfahrzeug weist eine erfindungsgemäße Bilderzeugungseinrichtung auf. Des Weiteren umfasst die Kopf-Oben-Anzeigevorrichtung eine Optikeinrichtung, wobei die Optikeinrichtung dazu ausgebildet ist, das mittels des Bildschirms bereitstellbare Bild auf die lichtdurchlässige Projektionsfläche zu projizieren. Insbesondere kann die Optikeinrichtung Optikelemente in Form von Spiegeln umfassen, welche zum Reflektieren des von dem Bildschirm der Bilderzeugungseinrichtung bereitgestellten Bilds hin zu der lichtdurchlässigen Projektionsfläche ausgebildet sind. Beispielsweise kann einer der Spiegel als Faltspiegel ausgebildet sein, welcher lediglich dem Umlenken des von dem Bildschirm abgegebenen Lichts dient. Ein weiterer Spiegel der Optikeinrichtung kann als asphärischer Spiegel ausgebildet sein, mittels welchem sich ein Vergrößern des von dem Bildschirm bereitgestellten Bilds erreichen lässt.

Das erfindungsgemäße Kraftfahrzeug weist eine erfindungsgemäße Kopf-Oben-Anzeigevorrichtung auf, welche auch als Head-Up-Display des Kraftfahrzeugs bezeichnet werden kann.

Bei der Verwendung der Kopf-Oben-Anzeigevorrichtung beziehungsweise des Head-Up-Displays in dem Kraftfahrzeug kann die lichtdurchlässige Projektionsfläche als Frontscheibe des Kraftfahrzeugs ausgebildet sein. Zusätzlich oder alternativ kann die Projektionsfläche als durch eine von der Frontscheibe des Kraftfahrzeugs separat ausgebildete Scheibe bereitgestellt sein. Dementsprechend ist es möglich, das von dem Bildschirm bereitgestellte Bild mittels der Optikeinrichtung auf die als sogenannter Combiner ausgebildete, lichtdurchlässige und das Bild reflektierende Scheibe zu projizieren. Ein derartiger Combiner ist als von der Frontscheibe oder Windschutzscheibe des Kraftfahrzeugs separates Bauteil ausgebildet.

Die für die erfindungsgemäße Bilderzeugungseinrichtung beschriebenen Vorteile und bevorzugten Ausführungsformen gelten auch für die erfindungsgemäße Kopf-Oben-Anzeigevorrichtung sowie für das erfindungsgemäße Kraftfahrzeug und umgekehrt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Weitere Merkmale der Erfindung ergeben sich aus den Ansprüchen, den Figuren und der Figurenbeschreibung. Dabei zeigen:
- Fig. 1: schematisch eine in ein Kraftfahrzeug eingebaute Kopf-Oben-Anzeigevorrichtung mit einer Bilderzeugungseinrichtung;
- Fig. 2: schematisch einen möglichen Aufbau der Bilderzeugungseinrichtung gemäß Fig. 2 in einer Seitenansicht;
- Fig. 3: die Bilderzeugungseinrichtung gemäß Fig. 2 in einer Perspektivansicht;
- Fig. 4: eine weitere Seitenansicht der Bilderzeugungseinrichtung, wobei zusätzlich eine Auswerteeinrichtung gezeigt ist;
- Fig. 5: eine Ansicht auf eine Frontseite eines lichtdurchlässigen Abdeckelements der Bilderzeugungseinrichtung, wobei an einer Schmalseite des lichtdurchlässigen Abdeckelements ein Lichtsensor angeordnet ist;
- Fig. 6: eine Variante des Abdeckelements, bei welcher eine Mehrzahl von Lichtsensoren an voneinander verschiedenen Schmalseiten des Abdeckelements angeordnet sind;
- Fig. 7: schematisch eine weitere Variante der Bilderzeugungseinrichtung, bei welcher das Abdeckelement zwei im Wesentlichen rechtwinklig zueinander angeordnete Abschnitte umfasst, wobei der Lichtsensor mit einer Leiterplatte einer Beleuchtungseinheit der Bilderzeugungseinrichtung verbunden ist; und
- Fig. 8: eine weitere Variante der Bilderzeugungseinrichtung, bei welcher der Lichtsensor an der Schmalseite einer frontseitigen Scheibe eines Bildschirms der Bilderzeugungseinrichtung angeordnet ist.

In den Figuren sind gleiche oder funktionsgleiche Elemente mit identischen Bezugszeichen versehen.

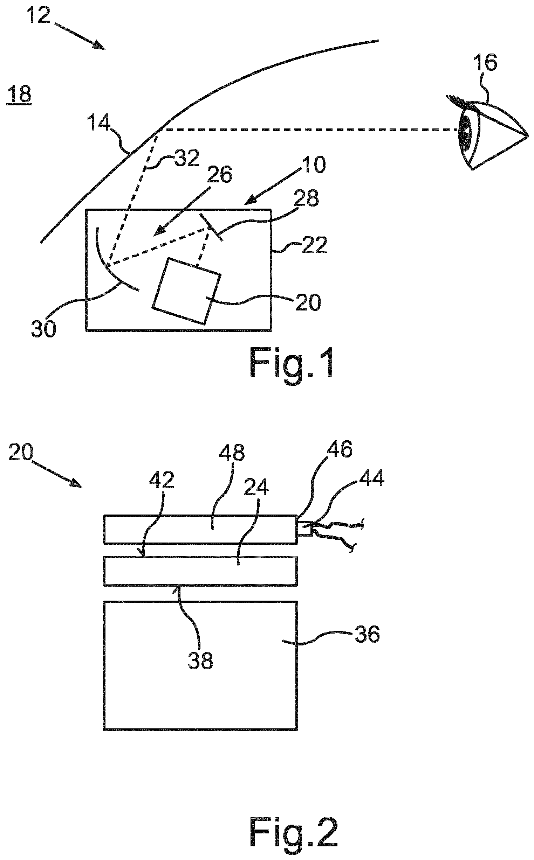

In Fig. 1 ist stark schematisiert ein Head-Up-Display beziehungsweise eine Kopf-Oben-Anzeigevorrichtung 10 gezeigt, welche in ein Kraftfahrzeug 12 eingebaut ist. Von dem Kraftfahrzeug 12 ist lediglich eine lichtdurchlässige Projektionsfläche in Form einer Frontscheibe 14 oder Windschutzscheibe des Kraftfahrzeugs 12 gezeigt. Des Weiteren ist von einem Nutzer 16 der Kopf-Oben-Anzeigevorrichtung 10 in Fig. 1 schematisch ein Auge dargestellt, welches durch die Frontscheibe 14 hindurch in eine Umgebung 18 des Kraftfahrzeugs 12 blickt. Die Kopf-Oben-Anzeigevorrichtung 10 umfasst eine Bilderzeugungseinrichtung 20, welche in Fig. 1 lediglich schematisch dargestellt ist. Die Bilderzeugungseinrichtung 20 kann in einem Gehäuse 22 der Kopf-Oben-Anzeigevorrichtung 10 angeordnet sein, wobei das Gehäuse 22 in Fig. 1 ebenfalls stark schematisiert dargestellt ist.

Gemäß Fig. 2 umfasst die Bilderzeugungseinrichtung 20 einen Bildschirm 24 zum Bereitstellen eines Bilds. Das Bild kann im Betrieb der Bilderzeugungseinrichtung 20 beziehungsweise der Kopf-Oben-Anzeigevorrichtung 10 an der lichtdurchlässigen Projektionsfläche etwa in Form der Frontscheibe 14 des Kraftfahrzeugs 12 in das Sichtfeld des Nutzers 16 reflektiert werden. Zu diesem Zweck kann die Kopf-Oben-Anzeigevorrichtung 10 eine Optikeinrichtung 26 umfassen, von welcher in Fig. 1 beispielhaft und schematisch Optikelemente in Form eines erster Spiegels 28 und eines zweiten Spiegels 30 gezeigt sind.

Der erste Spiegel 28 kann, so wie dies in Fig. 1 schematisch gezeigt ist, als sogenannter Faltspiegel oder Planspiegel ausgebildet sein, welcher lediglich dem Umlenken des von dem Bildschirm 24 ausgegebenen Lichts dient. Der zweite Spiegel 30 sorgt demgegenüber für ein Vergrößern des von dem Bildschirm 24 der Bilderzeugungseinrichtung 20 bereitgestellten Bilds, welches nach diesem Vergrößern an der lichtdurchlässigen Projektionsfläche vorliegend in Form der Frontscheibe 14 des Kraftfahrzeugs 12 in das Sichtfeld des Nutzers 16 reflektiert wird. In Fig. 1 ist durch einen Lichtstrahl 32 ein Weg des Lichts von dem Bildschirm 24 hin zu dem Auge des Nutzers 16 veranschaulicht. In vorliegend nicht näher gezeigter Art und Weise kann im Betrieb der Kopf-Oben-Anzeigevorrichtung 10 durch die Frontscheibe 14 hindurch Sonnenlicht hin zu dem Bildschirm 24 gelangen, welcher gemäß Fig. 2 der Bilderzeugungseinrichtung 20 zugehörig ist.

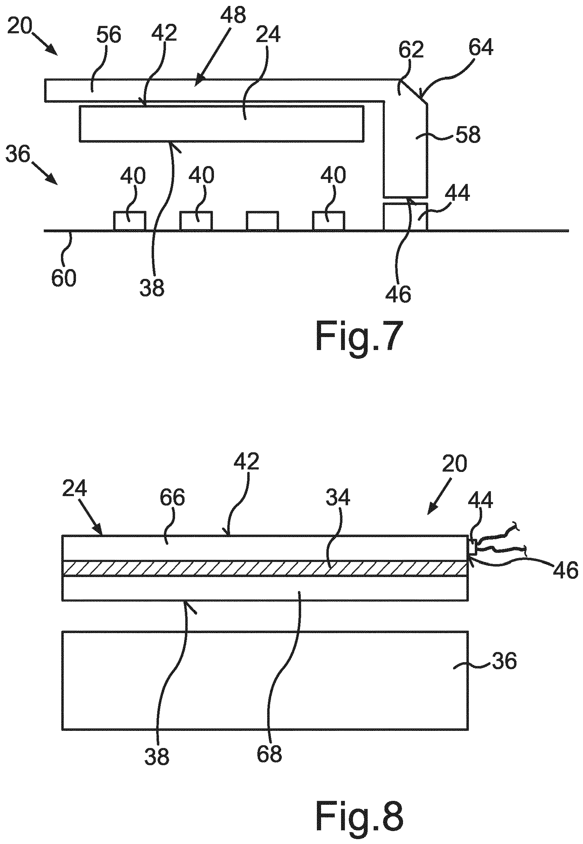

In Fig. 8 ist stark schematisiert ein möglicher Aufbau des Bildschirms 24 gezeigt, welcher als Flüssigkristallanzeige ausgebildet sein kann. Dementsprechend kann der Bildschirm 24 eine in Fig. 8 ebenfalls lediglich schematisch gezeigte Funktionsschicht 34 aufweisen, welche vorliegend nicht im Detail dargestellte Dünnschichttransistoren (thin-film transistors, TFT) und (vorliegend ebenfalls nicht näher gezeigte) Flüssigkristalle enthält. Wenn für die Dünnschichttransistoren der Flüssigkristallanzeige polykristallines Niedertemperatur-Silizium (low-temperature polycrystalline silicon, LTPS) zum Einsatz kommt, so kann der Bildschirm 24 als LTPS-TFT-Bildschirm bezeichnet werden.

Insbesondere eine Funktionstüchtigkeit der in der Funktionsschicht 34 vorhandenen Flüssigkristalle kann durch Wärme beeinträchtigt werden. Eine entsprechend starke Erwärmung des Bildschirms kann dazu führen, dass der Bildschirm 24 nicht mehr in der Lage ist, das Bild korrekt bereitzustellen, welches in das Sichtfeld des Nutzers 16 reflektiert werden soll.

Zu einer solchen, unerwünscht starken Erwärmung des Bildschirms 24 kann es insbesondere dann kommen, wenn durch die Frontscheibe 14 hindurch und über die Spiegel 30, 28 Sonnenlicht hin zu dem Bildschirm 24 gelangt, während zugleich eine Beleuchtungseinheit 36 der Bilderzeugungseinrichtung 20 (vergleiche Fig. 2) eine Rückseite 38 des Bildschirms 24 mit Licht beaufschlagt und somit den Bildschirm 24 hinterleuchtet.

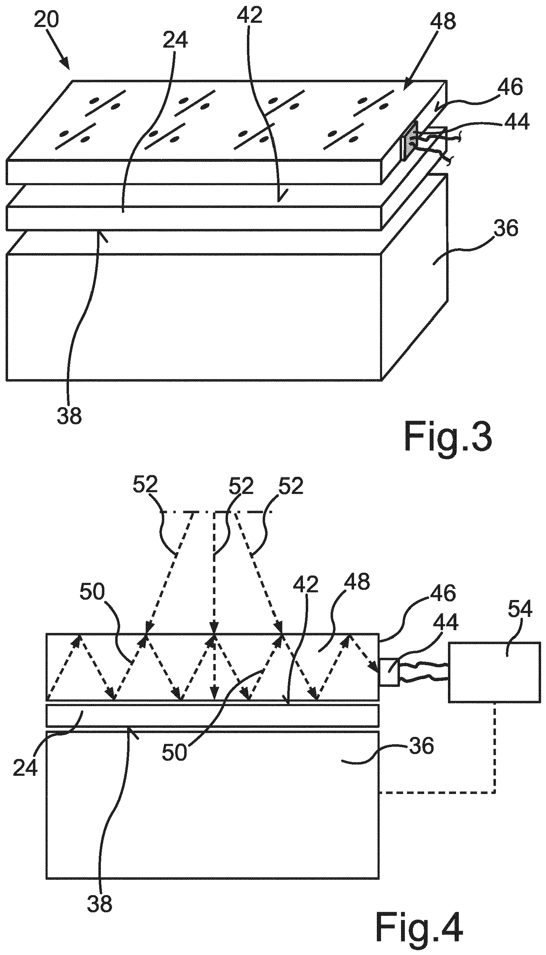

Wie dies schematisch in Fig. 7 dargestellt ist, weist die Beleuchtungseinheit 36, welche zum Hinterleuchten des Bildschirms 24 von der Rückseite 38 her ausgebildet ist, vorzugsweise eine Mehrzahl von Lichtquellen 40 auf, welche beispielsweise als Leuchtdioden (LEDs) ausgebildet sein können. Sowohl in Fig. 2 als auch in Fig. 3 sind aus Gründen der Übersichtlichkeit die Lichtquellen 40 der Beleuchtungseinheit 36 nicht näher dargestellt.

Insbesondere das Zusammenwirken des von der Beleuchtungseinheit 36 abgegebenen Lichts, mit welchem der Bildschirm 24 von der Rückseite 38 her beaufschlagt wird, mit dem (nicht gezeigten) Sonnenlicht kann zu einer (zumindest lokalen) Überhitzung des Bildschirms 24 und insbesondere der Funktionsschicht 34 (vergleiche Fig. 8) des Bildschirms 24 führen. Daher ist es vorteilhaft festzustellen, ob der Bildschirm 24 von einer der Rückseite 38 gegenüberliegenden Frontseite 42 her mit Sonnenlicht beaufschlagt wird, während zusätzlich die Beleuchtungseinheit 36 in Betrieb ist.

Um festzustellen, ob der Bildschirm 24 von seiner Frontseite 42 her mit Sonnenlicht beaufschlagt wird, weist die Bilderzeugungseinrichtung 20 vorliegend wenigstens einen Lichtsensor 44 auf, welcher schematisch beispielsweise in Fig. 2 und in Fig. 8 gezeigt ist.

Bei der Variante der Bilderzeugungseinrichtung 20 gemäß Fig. 2 ist der Lichtsensor 44 an einer Schmalseite 46 eines lichtdurchlässigen Abdeckelements 48 angeordnet, welches als von dem Bildschirm 24 separate Schutzscheibe ausgebildet ist. Das lichtdurchlässige Abdeckelement 48 in Form der Schutzscheibe ist hierbei an einer der Rückseite 38 des Bildschirms 24 gegenüberliegenden Seite des Bildschirms 24 angeordnet. Dementsprechend ist das als die Schutzscheibe ausgebildete Abdeckelement 48 angrenzend an die Frontseite 42 des Bildschirms 24 angeordnet.

Dies ist sowohl der schematischen Darstellung der übereinander gestapelt angeordneten Komponenten der Bilderzeugungseinrichtung 20 gemäß Fig. 2 als auch der Perspektivdarstellung dieser Komponenten in Fig. 3 gut entnehmbar. Mittels des wenigstens einen Lichtsensors 44 lässt sich zumindest ein Teil des Sonnenlichts erfassen, welches bei der Variante der Bilderzeugungseinrichtung 20 gemäß Fig. 2 durch das Abdeckelement 48 hindurch hin zu der Frontseite 42 des Bildschirms 24 gelangt.

Im Inneren des Abdeckelements 48 findet eine Reflexion, insbesondere eine Totalreflexion, zumindest eines Anteils des Strahlungsspektrums des Sonnenlichts statt. Dementsprechend wirkt das Abdeckelement 48 nach Art eines Lichtleiters, über welchen zumindest ein Teil des mittels des Lichtsensors 44 erfassbaren Sonnenlichts hin zu der Schmalseite 46 des Abdeckelements 48 gelangt.

Die innerhalb des als Lichtleiter ausgebildeten Abdeckelements 48 stattfindende Reflexion von zumindest einem Teil des zu erfassenden Sonnenlichts hin zu der Schmalseite 46 ist in Fig. 4 schematisch durch eine Reihe von Pfeilen 50 veranschaulicht. Aus Gründen der Übersichtlichkeit sind in Fig. 4 lediglich einige dieser Pfeile 50 mit einem Bezugszeichen versehen. Des Weiteren ist in Fig. 4 durch Sonnenstrahlen 52 Sonnenlicht veranschaulicht, welches durch die Frontscheibe 14 hindurch hin zu dem lichtdurchlässigen Abdeckelement 48 und zumindest teilweise durch das Abdeckelement 48 hindurch hin zu dem Bildschirm 24 gelangen kann.

Insbesondere, wenn die Lichtquellen 40 der Beleuchtungseinheit 36 (vergleiche Fig. 7) als Leuchtdioden ausgebildet sind, so strahlen diese Lichtquellen 40 im Betrieb der Bilderzeugungseinrichtung 20 kein oder so gut wie kein Infrarotlicht ab. Der zum Erfassen des Sonnenlichts ausgebildete Lichtsensor 44 ist daher vorzugsweise für Infrarotlicht empfindlich ausgebildet. Denn dann kann anhand der von dem wenigstens einen Lichtsensor 44 abgegebenen Signale sehr zuverlässig darauf geschlossen werden, dass über die Schmalseite 46 des Abdeckelements 48 Sonnenlicht in den Lichtsensor 44 eingebracht wird, wenn der Lichtsensor 44 Licht detektiert.

Um zu erreichen, dass möglichst wenig Infrarotlicht über die Optikeinrichtung 26 (vergleiche Fig. 1) hin zu dem Bildschirm 24 gelangt, kann beispielsweise der erste Spiegel 28 als sogenannter Kaltlichtspiegel ausgebildet werden. Hierbei reflektiert der erste Spiegel 28 lediglich sichtbares Licht, wobei der erste Spiegel 28 für Infrarotlicht durchlässig ausgebildet ist. Jedoch lässt sich selbst bei Ausbildung des ersten Spiegels 28 als ein solcher Kaltlichtspiegel nicht verhindern, dass ein gewisser Anteil des in dem Sonnenlicht enthaltenen Infrarotlichts dennoch hin zu dem Bildschirm 24 gelangt.

Daher ist es vorteilhaft, wenn die Beaufschlagung des Bildschirms 24 mit Sonnenlicht erfasst werden kann. Dies wird vorliegend durch den wenigstens einen Lichtsensor 44 gewährleistet, welcher an der Schmalseite des Abdeckelements 48 angeordnet ist.

Die von dem wenigstens einen Lichtsensor 44 gelieferten Signale können von einer Auswerteeinrichtung 54 (vergleiche Fig. 54) der Bilderzeugungseinrichtung 20 ausgewertet werden. Hierbei ist die Auswerteeinrichtung 54 vorzugsweise dazu ausgebildet, eine Lichtabgabe der Lichtquellen 40 der Beleuchtungseinheit 36 (vergleiche Fig. 7) zumindest zu verringern.

Des Weiteren kann die Auswerteeinrichtung 54 dazu ausgebildet sein, die Lichtquellen 40 auszuschalten beziehungsweise außer Betrieb zu nehmen. Insbesondere kann die Auswerteeinrichtung 54 bewirken, dass diejenigen Lichtquellen 40 in ihrer Lichtabgabe verringert oder gar ausgeschaltet werden, welche sich in einem in verstärktem Maß mit Sonnenlicht beaufschlagten Bereich des Bildschirms 24 befinden.

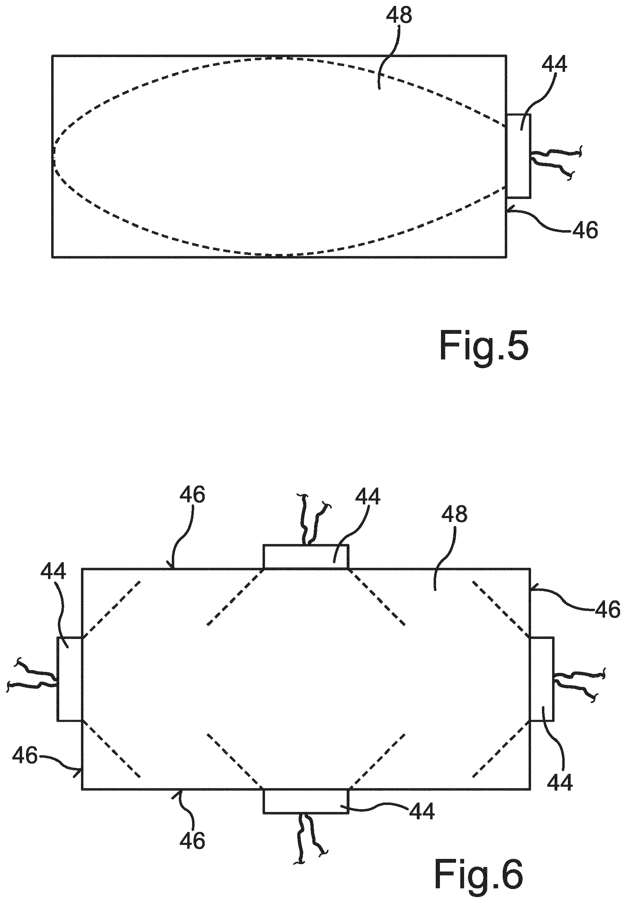

In Fig. 5 ist die Anordnung genau eines Lichtsensors 44 an der Schmalseite 46 des Abdeckelements 48 in einer Draufsicht auf eine dem ersten Spiegel 28 zugewandte Oberseite des Abdeckelements 48 gezeigt.

In Fig. 6 ist demgegenüber eine Variante der Bilderzeugungseinrichtung 20 dargestellt, bei welcher an voneinander verschiedenen Schmalseiten 46 des Abdeckelements 48 jeweilige Lichtsensoren 44 angeordnet sind. Beispielsweise kann das Abdeckelement 48 nach Art eines flachen Quaders ausgebildet sein und dementsprechend vier Schmalseiten 46 aufweisen. Bei der in Fig. 6 gezeigten Variante ist an jeder dieser vier Schmalseiten 46 ein jeweiliger Lichtsensor 44 angeordnet. Zusätzlich oder alternativ ist es möglich, an weniger als den beispielhaft in Fig. 6 gezeigten vier Schmalseiten 46 des Abdeckelements 48 einen jeweiligen Lichtsensor 44 anzuordnen. Beispielsweise kann die Bilderzeugungseinrichtung 20 zwei Lichtsensoren 44 oder drei Lichtsensoren 44 umfassen, welche an jeweiligen, voneinander verschiedenen Schmalseiten 46 des Abdeckelements 48 angeordnet sind.

Insbesondere durch die Verwendung einer Mehrzahl von Lichtsensoren 44, welche schematisch in Fig. 6 gezeigt ist, kann sehr gut festgestellt werden, welcher Bereich des Bildschirms 24 beziehungsweise Displays besonders stark von einfallendem Sonnenlicht betroffen ist.

In Fig. 7 ist eine weitere Variante der Bilderzeugungseinrichtung 20 schematisch gezeigt, bei welcher das Abdeckelement 48 einen ersten Abschnitt 56 und einen zweiten Abschnitt 58 umfasst. Der erste Abschnitt 56 des lichtdurchlässigen Abdeckelements 48 ist an einer der Rückseite 38 gegenüberliegenden Seite des Bildschirms 24 angeordnet. Dementsprechend ist der erste Abschnitt 56 der Frontseite 42 des Bildschirms 24 zugewandt. Der zweite Abschnitt 58 des Abdeckelements 48 erstreckt sich von der Seite des Bildschirms 24, welche der Rückseite 38 des Bildschirms 24 gegenüberliegt, hin zu einer Leiterplatte 60 der Beleuchtungseinheit 36. Dementsprechend reicht der zweite Abschnitt 58 zumindest nahezu bis an die Leiterplatte 60 heran. Die Leiterplatte 60 der Beleuchtungseinheit 36 ist in Fig. 7 lediglich schematisch dargestellt.

Mit der Leiterplatte 60 ist bei der in Fig. 7 schematisch gezeigten Variante der Bilderzeugungseinrichtung 20 der Lichtsensor 44 verbunden, insbesondere elektrisch leitend verbunden. Dementsprechend ist bei dieser Ausgestaltung des Abdeckelements 48 die Schmalseite 46 des Abdeckelements 48, an welcher der Lichtsensor 44 angeordnet ist, als der Leiterplatte 60 zugewandte Stirnseite des zweiten Abschnitts 58 des Abdeckelements 48 ausgebildet. Aufgrund der Verbindung des Lichtsensors 44 mit der Leiterplatte 60 der Beleuchtungseinheit 36 gestaltet sich die Verdrahtung des Lichtsensors 44 bei der in Fig. 7 gezeigten Variante der Bilderzeugungseinrichtung 20 besonders einfach.

In einem Eckbereich 62 des Abdeckelements 48 geht der erste Abschnitt 56 in den zweiten Abschnitt 58 über. Der Eckbereich 62 weist eine Außenseite 64 auf, welche bezogen auf die Abschnitte 56, 58 geneigt ausgerichtet ist. Durch diese nach Art einer Fase des Abdeckelements 48 ausgebildete Außenseite 64 lässt sich besonders gut das innerhalb des Abdeckelements 48 reflektierte Sonnenlicht, insbesondere das in dem Sonnenlicht enthaltene Infrarotlicht, hin zu dem Lichtsensor 44 transportieren. Denn die Außenseite 64 ist zum Reflektieren zumindest eines Teils des zu erfassenden und in das Abdeckelement 48 eingekoppelten Sonnenlichts hin zu der Schmalseite 46 ausgebildet.

Bei der eine eher komplexe Formgebung aufweisenden Ausgestaltung des Abdeckelements 48 gemäß Fig. 7 ist es vorteilhaft, wenn das Abdeckelement 48 aus einem Kunststoff gebildet ist. Denn so lassen sich die Abschnitte 56, 58 besonders einfach einstückig miteinander ausbilden. Zudem lässt sich besonders einfach die abgeschrägte Außenseite 64 in dem Eckbereich 62 des Abdeckelements 48 bereitstellen, wenn das Abdeckelement 48 aus Kunststoff gebildet ist.

Auch das in Fig. 2 bis Fig. 6 gezeigte Abdeckelement 48, welches separat von dem Bildschirm 24 ausgebildet ist, kann aus einem Kunststoff gebildet sein. Ebenso ist es möglich, das Abdeckelement 48, welches in Fig. 2 bis Fig. 6 gezeigt ist, als aus einem Glas gebildete Schutzscheibe auszubilden. Durch diese Glasscheibe hindurch kann nämlich das von dem Bildschirm 24 abgegebene beziehungsweise bereitgestellte Bild besonders ungehindert unter Nutzung der Optikeinrichtung 26 in den Sichtbereich des Nutzers 16 gelangen. Und wenn Sonnenlicht durch die Schutzscheibe hindurchtritt, und zwar entlang einer Richtung, entlang welcher der Nutzer 16 das von dem Bildschirm 24 bereitgestellte Bild sehen kann, wird zumindest ein Teil des Sonnenlichts hin zu der Schmalseite 46 des Abdeckelements 48 transportiert. Dort kann dieser Anteil des Sonnenlichts sehr einfach mittels des Lichtsensors 44 detektiert werden.

In Fig. 8 ist eine weitere Variante der Bilderzeugungseinrichtung 20 schematisch gezeigt. Hierbei ist das Abdeckelement 48 nicht als von dem Bildschirm 24 separate Schutzscheibe ausgebildet. Vielmehr ist das Abdeckelement als frontseitige Scheibe 66 des Bildschirms 24 ausgebildet. Die frontseitige Scheibe 66 liegt der Rückseite 38 des Bildschirms 24 gegenüber. An der Rückseite 38 weist der Bildschirm 24 gemäß der schematischen Darstellung in Fig. 8 eine weitere, rückwärtige Scheibe 68 auf. Zwischen diesen beiden Scheiben 66, 68 ist die Funktionsschicht 34 des Bildschirms 24 angeordnet.

Gemäß der schematischen Darstellung in Fig. 8 ist der wenigstens eine Lichtsensor 44 direkt an der Schmalseite 46 der frontseitigen Scheibe 66 des Bildschirms 24 angeordnet. Entsprechend ist hier ein besonders kompakter Aufbau der Bilderzeugungseinrichtung 20 erreicht. Jedoch entfällt die Schutzwirkung des als Schutzscheibe dienenden Abdeckelements 48, welche beispielsweise bei den Varianten der Bilderzeugungseinrichtung 20 gemäß Fig. 2 bis Fig. 7 als von dem Bildschirm 24 separates Element vorgesehen ist.

Insgesamt zeigen die Beispiele, wie durch den wenigstens einen Lichtsensor 44 ein indirekter Sensor zum Erfassen von Sonnenlicht in der Bilderzeugungseinrichtung 20 der Kopf-Oben-Anzeigevorrichtung 10 bereitgestellt werden kann.

## Patentansprüche

1. Bilderzeugungseinrichtung (20) für eine Kopf-Oben-Anzeigevorrichtung (10) eines Kraftfahrzeugs (12), mit einem Bildschirm (24) zum Bereitstellen eines Bilds, welches an einer lichtdurchlässigen Projektionsfläche (14) in ein Sichtfeld eines Nutzers (16) der Kopf-Oben-Anzeigevorrichtung (10) reflektierbar ist, mit einer Beleuchtungseinheit (36) zum Beaufschlagen einer Rückseite (38) des Bildschirms (24) mit Licht, und mit wenigstens einem Lichtsensor (44) zum Erfassen von Sonnenlicht, mit welchem der Bildschirm (24) beaufschlagbar ist,
**dadurch gekennzeichnet, dass**
der wenigstens eine Lichtsensor (44) an einer Schmalseite (46) eines lichtdurchlässigen Abdeckelements (48) der Bilderzeugungseinrichtung (20) angeordnet ist, wobei zumindest ein Teil des zu erfassenden Sonnenlichts über die Schmalseite (46) des Abdeckelements (48) in den wenigstens einen Lichtsensor (44) einbringbar ist.

2. Bilderzeugungseinrichtung (20) nach Anspruch 1,
**dadurch gekennzeichnet, dass**
das Abdeckelement (48) als Lichtleiter für in dem Sonnenlicht enthaltenes Infrarotlicht ausgebildet ist, wobei in das Abdeckelement (48) eingekoppeltes Infrarotlicht innerhalb des Abdeckelements (48) hin zu der Schmalseite (46) transportierbar ist, und wobei der wenigstens eine Lichtsensor (44) zum Erfassen von Infrarotlicht ausgebildet ist.

3. Bilderzeugungseinrichtung (20) nach einem der vorhergehenden Ansprüche,
**dadurch gekennzeichnet, dass**
das Abdeckelement als frontseitige Scheibe (66) des Bildschirms (24) ausgebildet ist, wobei die frontseitige Scheibe (66) der Rückseite (38) des Bildschirms (24) gegenüberliegt.

4. Bilderzeugungseinrichtung (20) nach einem der vorhergehenden Ansprüche, **dadurch gekennzeichnet, dass**
das Abdeckelement (48) als von dem Bildschirm (24) separate Schutzscheibe ausgebildet ist, wobei die Schutzscheibe an einer der Rückseite (38) des Bildschirms (24) gegenüberliegenden Seite des Bildschirms (24) angeordnet ist.

5. Bilderzeugungseinrichtung (20) nach einem der vorhergehenden Ansprüche, **dadurch gekennzeichnet, dass**
das Abdeckelement (48) aus einem Glas und/oder aus einem Kunststoff gebildet ist.

6. Bilderzeugungseinrichtung (20) nach einem der vorhergehenden Ansprüche, **dadurch gekennzeichnet, dass**
das Abdeckelement (48) einen ersten Abschnitt (56) umfasst, welcher an einer der Rückseite (38) des Bildschirms (24) gegenüberliegenden Seite des Bildschirms (24) angeordnet ist, wobei sich ein zweiter Abschnitt (58) des Abdeckelements (48), welcher die Schmalseite (46) aufweist, von der Seite des Bildschirms (24), welche der Rückseite (38) gegenüberliegt, hin zu einer Leiterplatte (60) der Beleuchtungseinheit (36) erstreckt, und wobei der Lichtsensor (44) mit der Leiterplatte (60) verbunden ist.

7. Bilderzeugungseinrichtung (20) nach Anspruch 6,
**dadurch gekennzeichnet, dass**
an der den Lichtsensor (44) kontaktierenden Leiterplatte (60) eine Mehrzahl von Lichtquellen (40) der Beleuchtungseinheit (36) angeordnet sind, wobei die Lichtquellen (40) zum Beaufschlagen der Rückseite (38) des Bildschirms (24) mit dem Licht ausgebildet sind.

8. Bilderzeugungseinrichtung (20) nach Anspruch 6 oder 7,
**dadurch gekennzeichnet, dass**
ein Eckbereich (62) des Abdeckelements (48), in welchem der erste Abschnitt (56) in den zweiten Abschnitt (58) übergeht, eine Außenseite (64) aufweist, welche bezogen auf die Abschnitte (56, 58) geneigt ausgerichtet ist, wobei die Außenseite (64) zum Reflektieren von zumindest einem Teil des zu erfassenden und in das Abdeckelement (48) eingekoppelten Sonnenlichts hin zu der Schmalseite (46) ausgebildet ist.

9. Bilderzeugungseinrichtung (20) nach einem der Ansprüche 6 bis 8,
**dadurch gekennzeichnet, dass**
der erste Abschnitt (56) und der zweite Abschnitt (58) des Abdeckelements (48) einstückig miteinander ausgebildet sind.

10. Bilderzeugungseinrichtung (20) nach einem der vorhergehenden Ansprüche, **dadurch gekennzeichnet, dass**
die Bilderzeugungseinrichtung (20) eine Mehrzahl von Lichtsensoren (44) aufweist, welche an voneinander verschiedenen Schmalseiten (46) des Abdeckelements (48) angeordnet sind.

11. Bilderzeugungseinrichtung (20) nach einem der vorhergehenden Ansprüche, **dadurch gekennzeichnet, dass**
die Bilderzeugungseinrichtung (20) eine Auswerteeinrichtung (54) umfasst, welche zum Auswerten von Signalen des wenigstens einen Lichtsensors (44) ausgebildet ist, wobei die Auswerteeinrichtung (54) dazu ausgebildet ist, eine Lichtabgabe wenigstens einer Lichtquelle (40) der Beleuchtungseinheit (36) im Betrieb der Bilderzeugungseinrichtung (20) zumindest zu verringern.

12. Kopf-Oben-Anzeigevorrichtung (10) für ein Kraftfahrzeug (12), mit einer Bilderzeugungseinrichtung (20) nach einem der vorhergehenden Ansprüche, wobei die Kopf-Oben-Anzeigevorrichtung (10) eine Optikeinrichtung (26) umfasst, welche dazu ausgebildet ist, das mittels des Bildschirms (24) bereitstellbare Bild auf die lichtdurchlässige Projektionsfläche (14) zu projizieren.

13. Kraftfahrzeug (12) mit einer Kopf-Oben-Anzeigevorrichtung (10) nach Anspruch 12, wobei die lichtdurchlässige Projektionsfläche (14) als Frontscheibe des Kraftfahrzeugs (12) ausgebildet und/oder durch eine von der Frontscheibe des Kraftfahrzeugs (12) separat ausgebildete Scheibe bereitgestellt ist.
